# FASCICULE DE BREVET EUROPEEN

(11) **EP 0 292 416 B1**
(45) Date de publication et mention de la délivrance du brevet: **06.07.1994**
(21) Numéro de dépôt: 88440038.3
(22) Date de dépôt: 13.05.1988
(51) Int. Cl.: F16M 7/00

(54) **Ensemble constituant un pied réglable pour poêles ou chaudières en fonte**
Einstellbare Fusseinrichtung für Hausöfen und Wassererhitzer aus Gusseisen
Adjustable supporting leg assembly for cast iron stores or boilers

(30) Priorité: 20.05.1987 FR 8707182
(43) Date de publication de la demande: 23.11.1988
(73) Titulaire: DE DIETRICH THERMIQUE, F-67110 Niederbronn-les-Bains (FR)
(72) Inventeur: Engel, Alfred, F-67500 Haguenau (FR); Helmer, Charles, F-67580 Mertzwiller (FR)
(74) Mandataire: Metz, Paul

(56) Documents cités:
- DE-A- 2 109 782
- FR-A- 487 018
- US-A- 2 084 481
- US-A- 2 256 892
- US-A- 3 844 518
- US-A- 3 924 602
- US-A- 4 046 354

## Description

La présente invention porte sur un ensemble constituant un pied réglable pour corps en fonte d'appareils ou de machines, notamment pour poêles ou chaudières en fonte selon le préambule de la revendication 1.

Actuellement, les poêles ou chaudières en fonte sont équipés :
- soit de pieds non réglables venus directement de fonderie avec le corps de l'appareil,
- soit de pattes ou d'oreilles également venues de fonderie, qu'il faut alors percer et tarauder pour y adapter un pied réglable.

Cette dernière solution est plus avantageuse pour l'utilisateur mais plus onéreuse que la précédente.

La demanderesse a donc cherché à conserver tous les avantages du pied réglable tout en diminuant son coût, elle s'est donc imposé de réduire les opérations suivantes :
- transport du corps de l'appareil, de la fonderie à l'atelier d'usinage,
- perçage,
- taraudage.

Ce but a été atteint en utilisant, de façon inhabituelle en mécanique, une tige filetée en appui sur des surfaces non filetées, réalisant le positionnement latéral de la tige filetée ; cette tige coopérant avec un écrou réalisant le positionnement vertical de cette même tige filetée.

L'invention consiste en un ensemble constituant un pied réglable pour corps en fonte d'appareils ou de machines, notamment pour poêles et chaudières, composé au moins de :
- une tige filetée sur au moins une partie de sa longueur,
- un écrou cooperant avec la tige filetée,
- un logement pour la tige filetée,
caractérisé en ce que le logement venant directement de fonderie avec le corps de l'appareil est composé d'un ensemble d'oreilles et de brides déterminant une pluralité de surfaces d'appui discontinues et non filetées, réalisant le positionnement latéral de la tige filetée.

Selon un premier mode de réalisation le pied réglable se caractérise :
- d'une part en ce que le logement est composé en partie haute et basse de deux brides transversales présentant chacune une surface d'appui non filetée et sensiblement demi cylindrique dont la partie convexe est dirigée vers le pied, et en partie centrale d'une bride transversale présentant une surface d'appui sensiblement cylindrique dont la partie concave est tournée vers le pied,
- d'autre part en ce que le pied comporte deux brides longitudinales s'étendant entre les deux brides transversales haute et basse, parallèlement à l'axe du logement.

Selon un deuxième mode de réalisation le pied réglable se caractérise en ce que d'une part le logement est composé en partie haute d'un élément de surface plane de la face interne du pied et en partie basse d'une encoche transversale déterminée par des brides latérales du pied , et présentant des surfaces élémentaires d'appui discontinues, sensiblement planes, et non filetées ; et en ce que d'autre part l'écrou est un écrou spécial formé d'une tête, et d'un corps présentant un taraudage perpendiculaire à l'axe du corps de l'écrou.

On comprendra mieux l'invention à l'aide de la description ci-après, faite en référence aux figures suivantes annexées :
- Figure 1 : vue en coupe d'un mode de réalisation préféré de l'invention.
- Figure 2 : section, selon le plan B-B, du mode de réalisation de la figure 1.
- Figure 3 : section, selon le plan C-C, du mode de réalisation de la figure 1.
- Figure 4 : section, selon le plan D-D, du mode de réalisation de la figure 1.
- Figure 5 : vue de gauche du mode de réalisation de la figure 1.
- Figure 6 : vue de face d'un deuxième mode de réalisation de l'invention.
- Figure 7 : coupe, selon le plan E-E, de la figure 6.
- Figure 8 : vue de dessus de la figure 6.

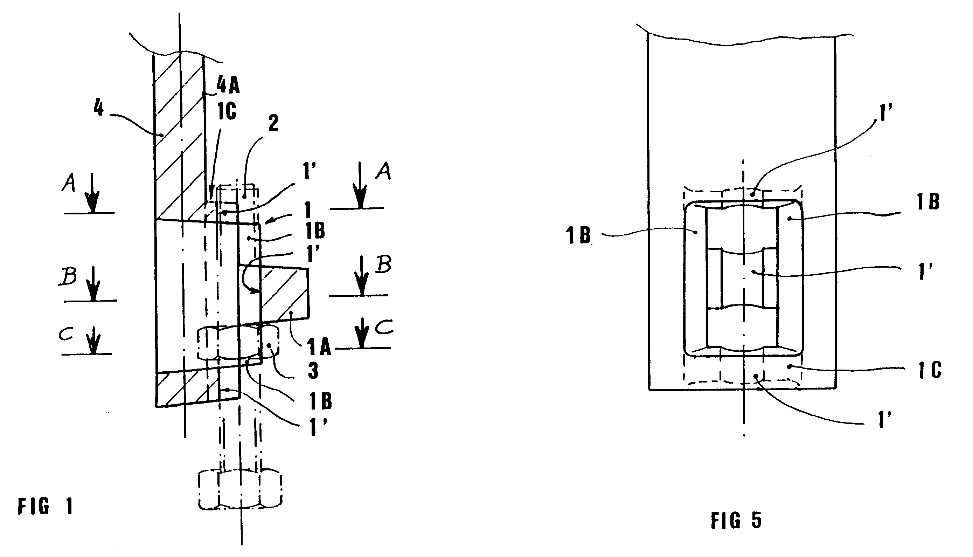

Le mode de réalisation préféré et non limitatif de l'invention, représenté aux figures 1 à 5 se compose d'un logement (1), d'une tige filetée (2), d'un écrou (3).

Le logement (1) est obtenu par un ensemble d'oreilles et de brides (1a, 1c), moulées avec le corps du poêle ou de la chaudière, et venu directement de fonderie avec celui-ci sans nécessiter d'usinage.

Cet ensemble d'oreilles et de brides (1a, 1c) détermine trois surfaces d'appui (1′) de forme cylindrique, et non filetées.

Ces surfaces d'appui (1′) positionnent latéralement la tige filetée (2) décrite ci-après, et forment le logement (1).

On distingue aux extrémités haute et basse du logement des brides transversales (1c) (voir figures 1, 4, 5) venues de fonderie avec la face interne (4a) du pied (4), et présentant chacune une surface d'appui (1′) non filetée et sensiblement demi cylindrique, dont la partie convexe est dirigée vers ledit pied (4).

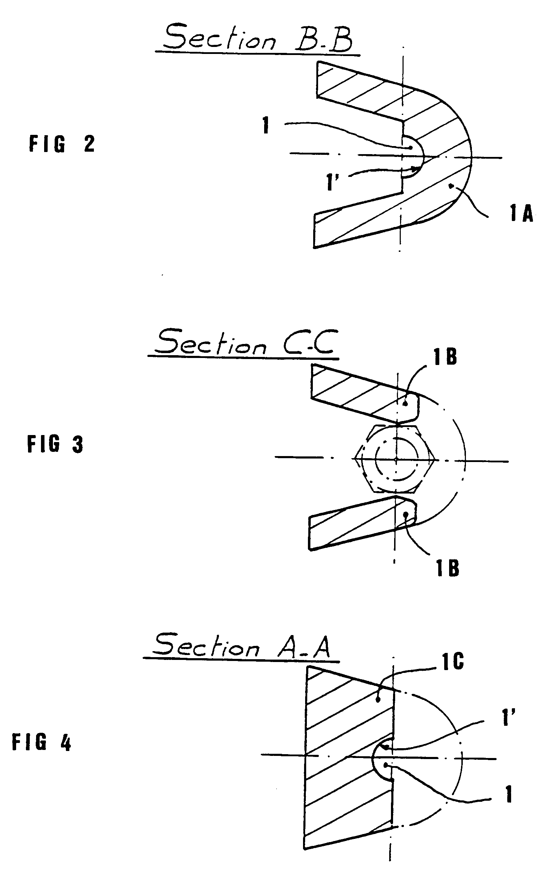

On distingue également une bride transversale (1a) en partie centrale (voir figures 1 et 2) présentant une surface d'appui (1′) sensiblement demi cylindrique dont la partie concave est tournée vers le pied (4).

La tige filetée (2) est une tige standard filetée sur toute sa longueur, ou au moins sur une partie de sa longueur.

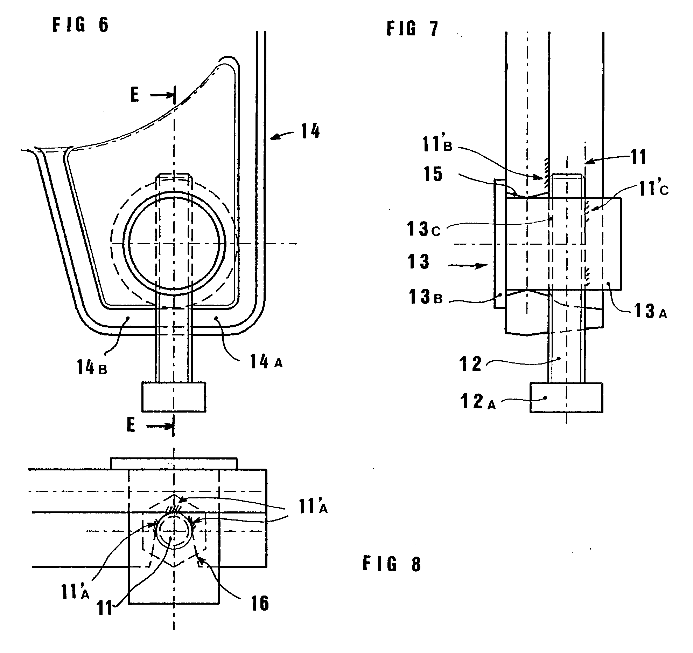

On distingue encore deux brides (1b) (voire figures 5) non usinées, venues de fonderie avec la face interne (4a) du pied (4) et s'étendant verticalement entre les deux brides transverales (1c) de part et d'autre de l'axe vertical du logement (1) comme sur la figure 3.

L'écrou taraudé (3) est un écrou standard qui coopère avec la tige filetée (2) et, en s'appuyant sur les brides (1b, 1a), positionne verticalement ladite tige filetée (2).

Les brides (1b) empêchent l'écrou (3) de tourner, ce qui permet le réglage en hauteur de la tige filetée (2).

Selon un deuxième mode de réalisation représenté aux figures 6, 7, 8, le pied réglable se compose d'un pied (14), d'un logement (11) venu de fonderie avec le pied (14) sans nécessiter d'usinage, d'un écrou spécial (13), d'une tige (12) filetée au moins sur une partie de sa longueur.

On distingue en partie basse du pied deux brides (14a, 14b) délimitant une encoche (16) sensiblement en U dont les trois surfaces élémentaires (11′a) réalisent en partie le positionnement latéral de la tige (12).

L'écrou spécial (13) se compose d'un corps cylindrique (13a) et d'une tête (13b).

Un taraudage (13c) traverse le corps de l'écrou perpendiculairement à l'axe de celui-ci.

L'écrou est mis en place dans un trou (15) du pied (14) et venu de fonderie avec ledit pied, de sorte que le filetage (13c) soit vertical, et que la tête de l'écrou s'appuie sur la face externe du pied (14).

La tige (12) est mise en place de façon que sa tête (12a) repose sur le sol et que la tige proprement dite traverse l'encoche (16) du pied et le taraudage (13c) de l'écrou, puis prenne appui sur un élément de surface plane (11′b) du pied (14). Cette surface (11′b) peut être comme sur la figure 7 dans le plan même de la face interne du pied, on peut éventuellement être portée par un bossage venu de fonderie avec la face interne du pied.

Le logement (11) venu de fonderie sans usinage est, dans ce mode de réalisation, composé des surfaces élémentaires discontinues sensiblement planes (11′a) et (11′b).

L'écrou spécial (13), immobilisé verticalement par le trou (15) réalise le positionnement en hauteur, et au niveau d'une partie (11′c) de son filetage complète le positionnement latéral de la tige filetée (12).

Eventuellement, pour éviter la sortie accidentelle de la tige filetée (12), celle-ci peut être équipée d'une butée non représentée, par exemple d'une goupille prévue soit en partie haute de la tige, soit en partie basse pour buter sur les brides (14a, 14b).

La présente invention peut s'appliquer également à tout appareil en fonte moulée, posé sur le sol et nécessitant un réglage de niveau.

## Revendications

1. Ensemble constituant un pied réglable pour corps en fonte d'appareils ou de machines, notamment pour poêles et chaudières, composé au moins de :
- une tige filetée (2, 12) sur au moins une partie de sa longueur,
- un écrou (3, 13) coopérant avec la tige filetée,
- un logement (1, 11) pour la tige filetée,
caractérisé en ce que le logement (1, 11) venant directement de fonderie avec le corps de l'appareil est composé d'une ensemble d'oreilles et de brides déterminant une pluralité de surfaces d'appui (1′, 11′i) discontinues et non filetées réalisant le positionnement latéral de la tige filetée.

2. Ensemble selon la revendication précédente caractérisé :
- d'une part en ce que le logement (1) est composé en parties haute et basse de deux brides transversales (1c) présentant chacune une surface d'appui (1′) non filetée et sensiblement demi cylindrique dont la partie convexe est dirigée vers le pied (4), et en partie centrale d'une bride transversale (1a) présentant une surface d'appui sensiblement cylindrique dont la partie concave est tournée vers le pied (4),
- d'autre part en ce que le pied (4) comporte deux brides longitudinales (1b) s'étendant entre les deux brides transversales (1c) parallèlement à l'axe du logement (1).

3. Ensemble selon la revendication principale caractérisé en ce que d'une part le logement (11) est composé en partie haute d'un élément de surface plane (11′b) de la face interne du pied (14) et en partie basse d'une encoche (16) déterminée par des brides latérales (14a, 14b) du pied (14) et présentant des surfaces élémentaires d'appui sensiblement planes (11′a) ; et en ce que d'autre part l'écrou (13) est un écrou spécial formé d'une tête (13b) et d'un corps (13a) présentant un taraudage (13c) perpendiculaire à l'axe du corps (13a) de l'écrou.

## Claims

1. Assembly forming an adjustable leg for cast iron bodies of equipment or machines, in particular for stoves and boilers, composed of at least:
- a rod (2, 12) threaded over at least part of its length,
- a nut (3, 13) cooperating with the threaded rod,
- a housing (1, 11) for the threaded rod,
characterised in that the housing (1, 11), coming directly from casting with the body of the equipment, is composed of an assembly of lugs and flanges defining a plurality of discontinuous, non-threaded supporting surfaces (1', 11'i) producing the lateral positioning of the threaded rod.

2. Assembly according to the preceding claim, characterised in that:
- on the one hand, the housing (1) is composed of two transverse flanges (1c) as upper and lower parts, each having a non-threaded, substantially semi-cylindrical supporting surface (1'), the convex part of which is directed towards the leg (4), and a transverse flange (1a) as a central part, having a substantially cylindrical supporting surface, the concave part of which faces towards the leg (4),
- in that, on the other hand, the leg (4) comprises two longitudinal flanges (1b) extending between the two transverse flanges (1c), parallel with the axis of the housing (1).

3. Assembly according to the main claim, characterised in that, on the one hand, the housing (11) is composed of a plane surface element (11'b) of the internal surface of the leg (14), as an upper part, and a notch (16) defined by lateral flanges (14a, 14b) of the leg (14) and having substantially plane elementary supporting surfaces (11'a), as a lower part; and in that, on the other hand, the nut (13) is a special nut formed by a head (13b) and by a body (13a) having an internal screw thread (13c) which is perpendicular to the axis of the body (13a) of the nut.

## Patentansprüche

1. Einrichtung mit einem einstellbaren Fuß für den Gußkorpus von Vorrichtungen oder Maschinen, insbesondere für Zimmeröfen oder Heizkessel, mit wenigstens
- einem zumindest auf einem Teil seiner Länge mit Gewinde versehenen Bolzen (2, 12),
- einer mit dem Gewindebolzen zusammenwirkenden Schraubenmutter (3, 13),
- einer Aufnahme (1, 11) für den Gewindebolzen,
dadurch gekennzeichnet, daß die zusammen mit dem Korpus der Vorrichtung gegossene Aufnahme (1, 11) aus einem Satz von Augen und Flanschen besteht, die eine Mehrzahl von diskontinuierlichen und gewindelosen Anlageflächen (1, 11i) bestimmen, welche die Seitenführung des Gewindebolzens realisieren.

2. Einrichtung nach dem vorangehenden Anspruch, dadurch gekennzeichnet, daß
- einerseits die Aufnahme (1) im oberen und unteren Abschnitt zwei Seitenflansche (1c) aufweist, von denen jeder eine gewindelose und im wesentlichen halbzylindrische Anlagefläche (1') bildet, deren konvexer Teil dem Fuß (4) zugekehrt ist, und im Mittelabschnitt einen Seitenflansch (1a) aufweist, der eine im wesentlichen zylindrische Anlagefläche bildet, deren konkaver Teil dem Fuß (4) zugekehrt ist.
- andererseits der Fuß (4) Zwei Längsflansche (1b) aufweist, die sich zwischen den zwei Seitenflanschen (1c) parallel zur Achse der Aufnahme (1) erstrecken.

3. Einrichtung nach dem Hauptanspruch, dadurch gekennzeichnet, daß einerseits die Aufnahme (11) im oberen Abschnitt aus einem Element mit ebener Oberfläche (11'b) an der Innenseite des Fußes (14) und im unteren Abschnitt aus einer durch Seitenflansche (14a, 14b) des Fußes (14) gebildeten Aussparung (16), die im wesentlichen ebene Grundanlageflächen (11'a) bilden, besteht, andererseits die Mutter (13) eine von einem Kopf (13b) und einen Korpus (13a) gebildete Spezialmutter ist, die ein senkrecht zur Achse des Korpus' (13a) der Mutter angeordnetes Innengewinde (13c) aufweist.
